# FASCICULE DE BREVET EUROPEEN

(11) **EP 3 348 717 B1**
(45) Date de publication et mention de la délivrance du brevet: **05.08.2020**
(21) Numéro de dépôt: 18151694.9
(22) Date de dépôt: 15.01.2018
(51) Int. Cl.: E03C 1/10, E03B 1/04, B60R 15/00

(54) **DISPOSITIF DE SURVERSE DESTINÉ À ÊTRE AGENCÉ DANS UNE INSTALLATION SANITAIRE DE VÉHICULE DE TRANSPORT**
ÜBERLAUFVORRICHTUNG ZUM EINBAU IN EINE SANITÄRANLAGE EINES TRANSPORTFAHRZEUGS
AN OVERFLOW DEVICE INTENDED TO BE ARRANGED IN A SANITARY INSTALLATION OF A TRANSPORT VEHICLE

(30) Priorité: 16.01.2017 FR 1750319
(43) Date de publication de la demande: 18.07.2018
(73) Titulaire: ALSTOM Transport Technologies, 93400 Saint-Ouen (FR); SNCF Mobilités, 93200 Saint-Denis (FR)
(72) Inventeur: BLOT, Gregory, 77700 CHESSY (FR); DIVINE, Julien, 92370 CHAVILLE (FR)
(74) Mandataire: Lavoix

(56) Documents cités:
- DE-U1- 20 104 512

## Description

La présente invention concerne un dispositif de surverse destiné à être agencé dans une installation sanitaire de véhicule de transport, entre un réservoir d'eau claire et un réservoir d'eau impure.

Une installation sanitaire de véhicule de transport comporte habituellement un lavabo, une cuvette de WC, un réservoir d'eau claire et deux réservoirs d'eau impure, et plus particulièrement un réservoir dit « d'eau grise » et un réservoir d'eau usagée.

Le réservoir d'eau claire est principalement destiné à alimenter le lavabo en eau.

Le réservoir d'eau grise est destiné à récolter l'eau provenant du lavabo de l'installation sanitaire, et à alimenter la cuvette de WC en eau, lorsque la chasse d'eau est actionnée.

Enfin, le réservoir d'eau usagée est destiné à récolter l'eau provenant de la cuvette de WC.

Lorsque le niveau d'eau dans le réservoir d'eau grise est inférieur à un niveau prédéfini (par exemple 50%), il est nécessaire de compléter ce niveau d'eau pour un fonctionnement optimal de la chasse d'eau. Ceci survient notamment lorsque la chasse d'eau est utilisée plus souvent que le lavabo.

Afin de compléter ce niveau d'eau dans le réservoir d'eau grise, de l'eau est directement prélevée depuis le réservoir d'eau claire, via une conduite dédiée.

Il est particulièrement important d'éviter tout retour d'eau impure depuis le réservoir d'eau grise vers le réservoir d'eau claire à travers cette conduite dédiée, afin d'éviter une contamination de l'eau claire pour que celle-ci reste potable. Cela est d'autant plus le cas dans un véhicule de transport, qui lorsqu'il est en mouvement entraine des mouvements d'eau et des éclaboussures dans l'installation sanitaire.

On connait déjà, dans l'état de la technique, des moyens anti-retours que l'on peut disposer dans ladite conduite dédiée, afin d'éviter la contamination de l'eau claire. De tels moyens connus sont toutefois insuffisants, présentant des problèmes de fiabilité, et/ou ne respectant pas la norme EN1717 concernant les systèmes de protection appropriés au regard d'un fluide de catégorie 5, c'est-à-dire un fluide présentant un danger pour la santé humaine en raison de la présence d'éléments microbiologiques ou viraux.

On connait également, d'après DE 201 04 512 U1, un dispositif de surverse similaire à celui du préambule de la revendication 1.

L'invention a notamment pour but de remédier à cet inconvénient, en proposant un dispositif anti-retour fiable et respectant la norme EN1717.

A cet effet, l'invention est représentée dans la revendication 1: un dispositif de surverse destiné à être agencé dans une installation sanitaire de véhicule de transport, entre un premier réservoir et un second réservoir, comportant une enceinte principale, s'étendant dans une direction verticale entre un embout supérieur d'arrivée d'eau, destiné à être raccordé au premier réservoir, et un premier embout inférieur de sortie d'eau, destiné à être raccordé au second réservoir, caractérisé en ce que:
- le dispositif de surverse comporte une enceinte secondaire comprenant un second embout inférieur de sortie d'eau, l'enceinte secondaire étant adjacente à l'enceinte principale, et l'enceinte principale comprenant une première ouverture latérale de trop plein débouchant dans l'enceinte secondaire, la première ouverture latérale étant agencée entre l'embout supérieur d'arrivée d'eau et l'embout inférieur de sortie d'eau dans la direction verticale, et
- l'enceinte principale comporte au moins un organe de protection s'étendant transversalement dans cette enceinte principale, en recouvrant plus de 70% de la surface d'une section transversale de cette enceinte principale.

En cas de remontée d'eau depuis le réservoir d'eau impure, cette eau emplit l'enceinte principale jusqu'à atteindre l'ouverture de trop plein, et s'écoule alors dans l'enceinte secondaire plutôt que de remonter jusqu'à l'embout supérieur d'arrivée d'eau.

Par ailleurs, les organes de protection forment des brise-flots limitant les mouvements d'eau dans le dispositif de surverse, et les éclaboussures vers l'embout supérieur d'entrée d'eau.

Il en résulte que l'eau provenant du réservoir d'eau impure ne peut pas contaminer l'eau du réservoir d'eau claire, et cela de manière tout à fait fiable.

Un dispositif de surverse selon l'invention peut comporter en outre l'une ou plusieurs des caractéristiques suivantes, prises seules ou selon toutes combinaisons techniquement envisageables.
- Chaque organe de protection comporte au moins une paroi de protection inclinée vers le bas, et s'étend transversalement entre un bord supérieur solidarisé à une paroi latérale délimitant l'enceinte principale, et un bord libre inférieur.
- L'enceinte principale comporte des premier et second organes de protection agencés entre la première ouverture latérale et le premier embout inférieur de sortie d'eau dans la direction verticale, et agencés l'un en dessous de l'autre dans cette direction verticale.
- Le premier organe de protection comporte une première paroi de protection présentant un premier bord libre délimitant une première fente avec une paroi latérale de l'enceinte principale située en regard dans une direction transversale, et le second organe de protection comporte une seconde paroi de protection présentant un second bord libre délimitant une seconde fente avec une paroi latérale de l'enceinte principale située en regard dans la direction transversale, la première fente étant située en regard d'une partie pleine de la seconde paroi dans la direction verticale, et la seconde fente étant située en regard d'une partie pleine de la première paroi dans la direction verticale.

- L'enceinte principale comporte un troisième organe de protection agencé entre la première ouverture latérale et l'embout supérieur d'arrivée d'eau dans la direction verticale.
- L'enceinte secondaire comporte une seconde ouverture latérale, débouchant vers l'extérieur du dispositif de surverse.
- La seconde ouverture latérale est agencée au-dessus de la première ouverture latérale dans la direction verticale.

L'invention concerne également une installation sanitaire de véhicule de transport, comportant un premier réservoir et un second réservoir, caractérisé en ce qu'il comporte au moins un dispositif de surverse tel que défini précédemment, agencé entre le premier réservoir et le second réservoir.

Avantageusement, le premier réservoir est un réservoir d'eau claire, et le second réservoir est un réservoir d'eau grise.

Avantageusement, l'installation sanitaire comporte une cuvette de WC, l'embout de sortie du dispositif de surverse étant relié d'une part au second réservoir, et d'autre part à la cuvette de WC, via une vanne à trois voies.

L'invention sera mieux comprise à la lecture de la description qui va suivre, donnée uniquement à titre d'exemple et faite en se référant aux figures annexées, parmi lesquelles :
- La figure 1 est une vue schématique d'une installation sanitaire selon un exemple de mode de réalisation de l'invention ;
- La figure 2 est une vue partielle en perspective d'un dispositif de surverse équipant l'installation sanitaire de la figure 1, selon un mode de réalisation de l'invention.

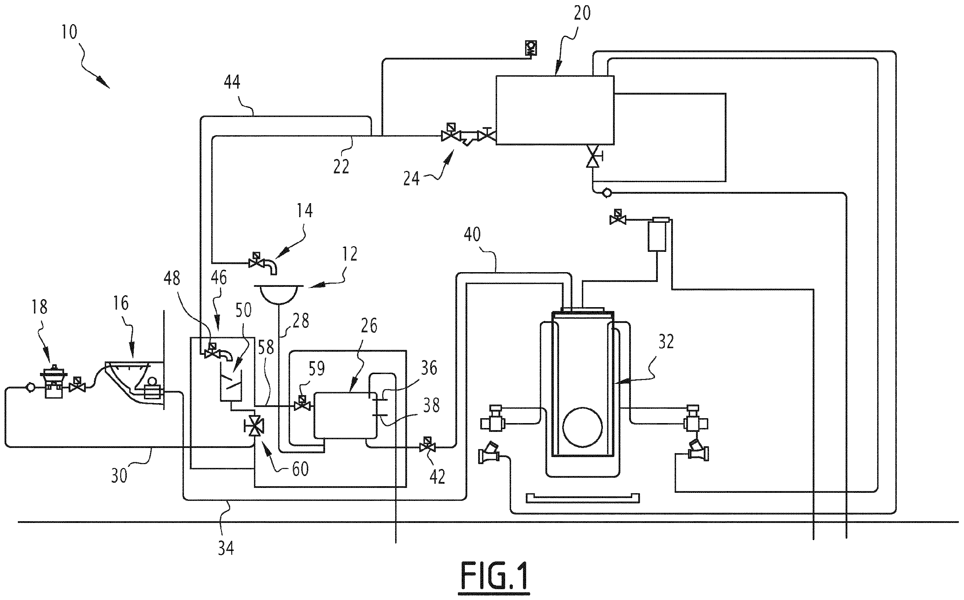

On a représenté, sur la figure 1, une installation sanitaire 10 destinée à équiper un véhicule de transport, tel qu'un véhicule de transport public. Par exemple, le véhicule de transport est un véhicule ferroviaire, mais il pourrait en variante être un véhicule routier, notamment un autobus, un camping-car, ou encore un véhicule aéronautique ou aérospatial.

L'installation sanitaire 10 comporte un lavabo 12 muni d'un robinet 14, de types classiques.

L'installation sanitaire 10 comporte par ailleurs une cuvette de WC 16, munie d'un système de chasse d'eau 18, comprenant classiquement une pompe à eau et un injecteur d'air comprimé.

L'installation sanitaire 10 comporte également un réservoir d'eau claire 20, dans lequel de l'eau potable est stockée. Ce réservoir d'eau claire 20 est destiné à alimenter en eau le robinet 14, via une première conduite d'alimentation 22. Avantageusement, la première conduite 22 comporte de manière classique un filtre à eau 24.

Le réservoir d'eau claire 20 est également raccordé à des conduites de remplissage, de drainage, de trop plein, et des conduits d'aération. Ceux-ci sont classiques et ne seront pas décrits en détail.

L'installation sanitaire 10 comporte par ailleurs un premier réservoir d'eau impure 26, ci-dessous appelé « réservoir d'eau grise 26 ».

Le réservoir d'eau grise 26 est alimenté en eau provenant du lavabo 12, via une seconde conduite d'eau grise 28, débouchant en extrémité inférieure du réservoir d'eau grise 26. Cette eau, dite eau grise, a été utilisée, notamment par un utilisateur s'étant lavée les mains, et n'est donc plus une eau claire.

Le réservoir d'eau grise 26 est par ailleurs raccordé à une troisième conduite d'eau grise 30, reliée au système de chasse d'eau 18. Ainsi, c'est l'eau grise qui est utilisée pour la chasse d'eau de la cuvette 16.

L'installation sanitaire 10 comporte par ailleurs un second réservoir d'eau impure 32, ci-dessous appelé « réservoir d'eau usagée 32 ».

Le réservoir d'eau usagée 32 est alimenté en eau provenant de la cuvette 16, cette eau n'étant pas réutilisable, via une quatrième conduite d'évacuation 34.

Le réservoir d'eau usagées 32 est également raccordé à des conduites de drainage et des conduits d'aération, qui sont classiques et ne seront donc pas décrits en détail.

Le réservoir d'eau grise 26 comporte un capteur de niveau haut 36 et un capteur de niveau bas 38. Le capteur de niveau haut 36 correspond par exemple à 95% de la contenance du réservoir d'eau grise 26, et le capteur de niveau bas 38 à 50% de la contenance du réservoir d'eau grise 26.

En fonctionnement nominal, le niveau de l'eau grise est compris entre ce niveau haut et ce niveau bas.

Lors d'une demande de chasse d'eau, une quantité d'eau grise (par exemple 0,4 L) est prélevée pour alimenter la cuvette 16, via la troisième conduite d'eau grise 30. Le niveau d'eau grise reste normalement supérieur au niveau bas.

Lorsque l'utilisateur se lave les mains, un volume d'eau s'écoule par le lavabo 12 jusqu'au réservoir d'eau grise 26 via la seconde conduite 28. Ce volume d'eau est par exemple d'environ 0,4L, et correspond donc sensiblement à la quantité d'eau grise prélevée pour la chasse d'eau. Ainsi, le niveau d'eau grise reste sensiblement constant.

Toutefois, lorsque l'utilisation du lavabo 12 est supérieure à l'utilisation de la chasse d'eau 18, le niveau d'eau grise augmente. Le capteur de niveau haut 36 détecte lorsque ce niveau atteint le niveau haut (notamment 95%). Il est alors nécessaire de vidanger le réservoir d'eau grise 26.

A cet effet, une cinquième conduite 40 s'étend entre le réservoir d'eau grise 26 et le réservoir d'eau usagée 32, afin d'évacuer l'eau grise en surplus vers ce réservoir d'eau usagée 32. Une première électrovanne 42 est agencée sur cette cinquième conduite 40, cette première électrovanne 42 étant commandée par un automate, de manière à être ouverte lorsque ce capteur haut 36 détecte que l'eau grise atteint le niveau haut. La première électrovanne 42 est par exemple ouverte pendant une durée prédéfinie après que le capteur 36 repasse à l'état de non-détection de niveau haut, assurant que le niveau de l'eau grise revienne entre les niveaux haut et bas.

Lorsque l'utilisation de la chasse d'eau 18 est supérieure à l'utilisation du lavabo 12, le niveau d'eau grise diminue. Le capteur de niveau bas 38 détecte lorsque ce niveau atteint le niveau bas (notamment 50%). Il est alors nécessaire de remplir le réservoir d'eau grise 26, pour assurer un bon fonctionnement de l'installation.

Ce remplissage est effectué depuis le réservoir d'eau claire 20, via une sixième conduite 44 connectée à la première conduite 22.

Il est nécessaire que l'eau grise ne puisse pas remonter vers le réservoir d'eau claire 20, afin de ne pas contaminer l'eau claire. A cet effet, des moyens anti-retours 46 sont prévus entre la sixième conduite 44 et le réservoir d'eau grise 26.

Une seconde électrovanne 48 est agencée à l'extrémité de la sixième conduite 44, en entrée des moyens anti-retours 46. Cette seconde électrovanne 46 est commandée par le capteur bas 38, de manière à être ouverte lorsque ce capteur bas 38 détecte que l'eau grise atteint un niveau inférieur au niveau bas.

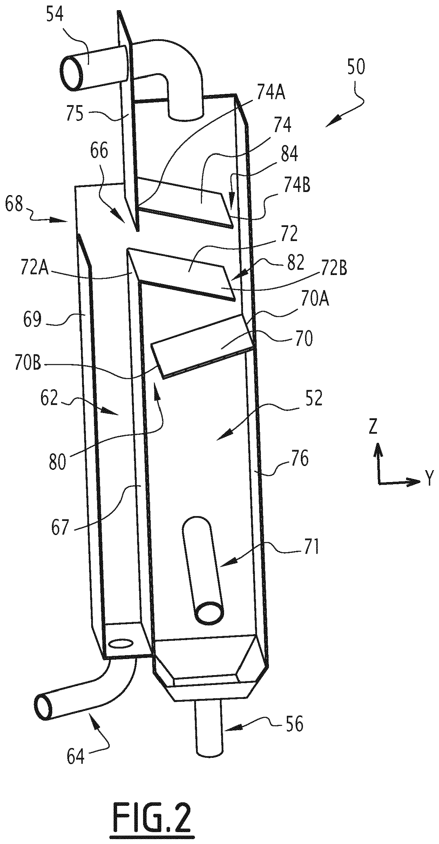

Les moyens anti-retours 46 vont maintenant être décrits plus en détail, notamment en référence à la figure 2.

Les moyens anti-retours 46 comportent un dispositif de surverse 50.

Le dispositif de surverse 50 comporte une enceinte principale 52, s'étendant dans une direction verticale Z entre un embout supérieur d'arrivée d'eau 54 et un premier embout inférieur de sortie d'eau 56.

L'embout supérieur d'arrivée d'eau 54 est destiné à être raccordé à la sixième conduite 44, notamment à la seconde électrovanne 48.

Le premier embout inférieur de sortie d'eau 56 est destiné à être raccordé au réservoir d'eau grise 26, via une septième conduite 58. Cette septième conduite 58 comporte une vanne 59, qui est ouverte par l'automate lorsque le niveau du réservoir d'eau grise 26 est inférieur à 50% (information captée par le capteur 38), et ainsi remplit le réservoir d'eau grise 26 via le dispositif de surverse 50.

Ce premier embout inférieur de sortie d'eau 56 est également raccordé à la troisième conduite d'eau grise 30, via une vanne à trois voies 60. Ainsi, le dispositif de surverse 50 peut également directement alimenter la chasse d'eau 18, notamment en cas de dysfonctionnement du réservoir d'eau grise 26.

Cette vanne trois voies 60 est par exemple actionnable manuelle par un opérateur, en cas de défaillance du réservoir d'eau grise 26 rapportée à cet opérateur. L'installation sanitaire 10 est considérée comme hors service tant que cette action manuelle n'a pas été effectuée suite à une telle défaillance. La vanne 59 est par ailleurs fermée dans ce mode de fonctionnement. Dans ce mode de fonctionnement, le réseau d'eau claire reste protégé du réseau d'eau usagée par le dispositif de surverse 50.

Le dispositif de surverse 50 comporte par ailleurs une enceinte secondaire 62, adjacente à l'enceinte principale 52 et s'étendant parallèlement à l'enceinte principale 52, et comprenant un second embout inférieur de sortie d'eau 64. Ce second embout inférieur de sortie d'eau 64 peut être raccordé au réservoir d'eau grise 26, au réservoir d'eau usagée 32 et/ou à une évacuation de trop plein.

L'enceinte principale 52 comprend une première ouverture latérale de trop plein 66 débouchant dans l'enceinte secondaire 62. Cette première ouverture de trop plein 66 définit donc un niveau d'eau maximal dans l'enceinte principale 52, au-delà duquel l'eau s'écoule dans l'enceinte secondaire 62.

La première ouverture latérale 66 est agencée entre l'embout supérieur d'arrivée d'eau 54 et l'embout inférieur de sortie d'eau 56 dans la direction verticale Z, dans une paroi commune 67 séparant les première 52 et seconde 62 enceintes. Ainsi, en cas de dysfonctionnement de l'évacuation de l'eau à travers le premier embout inférieur 56, l'eau monte dans l'enceinte principale 52, jusqu'à se verser dans l'enceinte secondaire 62, par laquelle elle est évacuée. L'eau ne monte donc jamais jusqu'à l'embout supérieur 54. On prévoit en effet une « garde d'air », c'est-à-dire une distance physique entre le niveau le plus bas de l'entrée d'eau 54 et le niveau d'eau maximal en situation de défaut, suffisante pour éviter toute contamination du réseau d'eau claire.

Avantageusement, l'enceinte secondaire 62 comporte une seconde ouverture latérale 68, débouchant vers l'extérieur du dispositif de surverse 50. Cette seconde ouverture latérale 68 est ménagée dans au moins une paroi 69 délimitant l'enceinte secondaire 62, distincte de la paroi commune 67. La seconde ouverture latérale 68 est par exemple agencée au-dessus de la première ouverture latérale 66 dans la direction verticale Z.

En cas de dysfonctionnement de l'évacuation de l'eau à travers le second embout inférieur 64, l'eau monte dans l'enceinte secondaire 62, jusqu'à se verser à travers cette seconde ouverture latérale 68. L'eau est ainsi évacuée, par exemple vers réservoir d'eau grise 26, vers le réservoir d'eau usagée 32 et/ou vers une évacuation de trop plein.

Un capteur de niveau d'eau 71 est logé dans l'enceinte principale 52, afin de définir un niveau d'eau optimal de fonctionnement. En fonctionnement, la seconde électrovanne 48 est ouverte lorsque le niveau d'eau dans l'enceinte principale 52 est inférieur audit niveau optimal, et fermée lorsque ce niveau d'eau atteint ou est supérieur à ce niveau optimal.

L'enceinte principale 52 comporte au moins un organe de protection s'étendant transversalement dans cette enceinte principale 52, en recouvrant plus de 70% de la surface d'une section transversale de cette enceinte principale 52. Dans le mode de réalisation décrit, chaque organe de protection est formé par une paroi de protection.

Plus particulièrement, dans l'exemple décrit, l'enceinte principale 52 comporte des première 70 et seconde 72 parois de protection agencées entre la première ouverture latérale 66 et le premier embout inférieur 56 de sortie d'eau dans la direction verticale Z, et agencées l'une en dessous de l'autre dans cette direction verticale Z.

L'enceinte principale 52 comporte également une troisième paroi de protection 74 agencée entre la première ouverture latérale 66 et l'embout supérieur d'arrivée d'eau 54 dans la direction verticale Z.

Chaque paroi de protection 70, 72, 74 est inclinée vers le bas, et s'étend transversalement entre un bord supérieur solidarisé à une paroi latérale délimitant l'enceinte principale 52, et un bord libre inférieur.

Ainsi, chaque paroi de protection 70, 72, 74 présente un bord libre délimitant une fente avec une paroi latérale de l'enceinte principale située en regard dans une direction transversale Y.

Plus particulièrement, la première paroi de protection 70 présente un premier bord supérieur 70A solidarisé à une première paroi latérale 76, par exemple opposée à la paroi commune 67 dans la direction transversale Y, et un premier bord libre 70B délimitant une première fente 80 avec cette paroi commune 67. Le premier bord libre 70B est situé en dessous du premier bord supérieur 70A dans la direction verticale Z. Par ailleurs, la première paroi de protection 70 comporte deux premiers bords latéraux, s'étendant chacun entre le premier bord supérieur 70A et le premier bord libre 70B, chaque premier bord latéral étant lié à une autre paroi latérale respective délimitant l'enceinte principale 52.

La seconde paroi de protection 72 présente un second bord supérieur 72A solidarisé à la paroi commune 67, et un second bord libre 72B délimitant une seconde fente 82 avec la première paroi 76. Le second bord libre 72B est situé en dessous du second bord supérieur 72A dans la direction verticale Z. Avantageusement, le second bord supérieur 72A coïncide avec un bord inférieur de la première ouverture latérale 66. Par ailleurs, la seconde paroi de protection 72 comporte deux seconds bords latéraux, s'étendant chacun entre le second bord supérieur 72A et le second bord libre 72B, chaque second bord latéral étant lié à une autre paroi latérale respective délimitant l'enceinte principale 52.

Il est à noter que la première fente 80 se situe, dans la direction verticale Z, en regard d'une partie pleine de la seconde paroi de protection 72, et que la seconde fente 82 se situe, dans la direction verticale Z, en regard d'une partie pleine de la première paroi de protection 70.

Ces première 70 et seconde 72 parois de protection ont une fonction de « brise-flot », permettant de stabiliser l'eau contenue dans l'enceinte principale 52, tout en évitant que des éclaboussures n'atteignent l'embout supérieur 54.

La première paroi de protection 70 agit principalement en mode de fonctionnement normal, et la seconde paroi de protection 72 en mode de fonctionnement dégradé, lorsque de l'eau s'écoule par la première ouverture latérale 66.

La troisième paroi de protection 74 présente un troisième bord supérieur 74A solidarisé à une paroi 75 agencée dans le prolongement de la paroi commune 67, et un troisième bord libre 74B délimitant une troisième fente 84 avec la première paroi 76. Le troisième bord libre 74B est situé en dessous du troisième bord supérieur 74A dans la direction verticale Z. Par ailleurs, la troisième paroi de protection 74 comporte deux troisièmes bords latéraux, s'étendant chacun entre le troisième bord supérieur 74A et le troisième bord libre 74B, chaque troisième bord latéral étant lié à une autre paroi latérale respective délimitant l'enceinte principale 52.

Il est à noter que la troisième fente 84 se situe, dans la direction verticale Z, en regard de la seconde fente 82. Les seconde 72 et troisième 74 parois de protection sont donc parallèles. La troisième fente 84 se retrouve ainsi à distance de la première ouverture latérale 66.

Cette troisième paroi de protection 74 améliore encore la sureté du dispositif de surverse 50, en empêchant toute projection d'eau depuis le bas vers l'espace situé au-dessus de cette troisième paroi de protection 74.

Il apparaît clairement que le dispositif de surverse 50 permet de fournir de l'eau claire depuis le réservoir d'eau claire 20, vers le réservoir d'eau grise 26 ou vers la cuvette 16, sans risque de retour d'eau impure.

Le fonctionnement du dispositif de surverse 50 selon l'invention va maintenant être décrit.

Dans un état initial de repos, la seconde électrovanne 48 d'alimentation du dispositif de surverse 50 est fermée. Le niveau d'eau dans le réservoir d'eau grise 26 est au niveau optimal de fonctionnement, par exemple correspondant au niveau haut.

Dans un état actif, le niveau d'eau dans le réservoir d'eau grise 26 diminue lorsque la chasse d'eau 18 est davantage utilisée que le lavabo 12. Lorsque le niveau d'eau est inférieur au niveau bas, la vanne 59 est ouverte, commandée par l'automate sur information du capteur de niveau bas 38, et l'eau contenue dans l'enceinte principale 52 s'écoule dans le réservoir d'eau grise 26 à travers le premier embout de sortie 56 et la septième conduite 58.

Puisque le niveau d'eau dans l'enceinte principale 52 diminue, et descend donc en dessous du niveau optimal défini par le capteur 71, la seconde électrovanne 48 d'alimentation du dispositif de surverse 50 est ouverte, commandée par ce capteur 71 ou par l'automate sur information du capteur 71. L'eau claire s'écoule alors depuis l'embout supérieur d'arrivée d'eau 54 dans l'enceinte principale 52. Cette seconde électrovanne 48 est fermée lorsque le niveau d'eau dans l'enceinte principale atteint de nouveau le niveau optimal.

Le niveau d'eau dans le réservoir d'eau grise 26 augmente jusqu'à ce que l'eau atteigne le niveau haut, observé par le capteur de niveau eau 36. Une fois ce niveau haut atteint, la vanne 59 est refermée. On retourne alors à l'état initial.

On prévoit par ailleurs plusieurs modes de défaillance.

Dans un premier mode de défaillance, il n'y a pas d'écoulement d'eau claire. Par exemple, le capteur 71 est défaillant et indique que le niveau est resté supérieur au niveau optimal, ou la seconde électrovanne 48 est bloquée en position fermée. Dans ce cas, il est impossible de remplir le réservoir d'eau grise 26. L'installation sanitaire est alors hors service, et son accès devrait être interdit.

Dans un second mode de défaillance, il y a écoulement d'eau claire en continu. Par exemple, le capteur 71 est défaillant et indique que le niveau d'eau dans l'enceinte principale 52 reste inférieur au niveau optimal, ou la seconde électrovanne 48 est bloquée en position ouverte. Dans ce cas, le surplus d'eau est évacué, d'abord par le second embout inférieur 64, puis, si l'évacuation par ce second embout inférieur 64 est insuffisante, par la seconde ouverture de trop plein 68.

On notera que l'invention n'est pas limitée au mode de réalisation précédemment décrit, et pourrait présenter diverses variantes sans sortir du cadre des revendications.

En particulier, la forme et le positionnement des organes de protection pourraient varier.

Par exemple, au moins l'un des organes de protection comporte deux parois inclinées vers le bas, convergeant l'une vers l'autre en délimitant entre elles une fente pour l'écoulement de l'eau. Ces parois peuvent être prolongées par des rebords s'étendant vers le bas, la fente étant définie entre ces rebords.

## Revendications

1. Dispositif de surverse (50) destiné à être agencé dans une installation sanitaire (10) de véhicule de transport, entre un premier réservoir (20) et un second réservoir (26), comportant une enceinte principale (52), s'étendant dans une direction verticale (Z) entre un embout supérieur d'arrivée d'eau (54), destiné à être raccordé au premier réservoir (20), et un premier embout inférieur de sortie d'eau (56), destiné à être raccordé au second réservoir (26),
**caractérisé en ce que** :
- le dispositif de surverse (50) comporte une enceinte secondaire (62) comprenant un second embout inférieur de sortie d'eau (64), l'enceinte secondaire (62) étant adjacente à l'enceinte principale (52), et l'enceinte principale (52) comprenant une première ouverture latérale de trop plein (66) débouchant dans l'enceinte secondaire (62), la première ouverture latérale (66) étant agencée entre l'embout supérieur d'arrivée d'eau (54) et l'embout inférieur de sortie d'eau (56) dans la direction verticale (Z), et
- l'enceinte principale (52) comporte au moins un organe de protection (70, 72, 74) s'étendant transversalement dans cette enceinte principale (52), en recouvrant plus de 70% de la surface d'une section transversale de cette enceinte principale (52).

2. Dispositif de surverse (50) selon la revendication 1, dans lequel chaque organe de protection (70, 72, 74) comporte au moins une paroi de protection (70, 72, 74) inclinée vers le bas, et s'étend transversalement entre un bord supérieur (70A, 72A, 74A) solidarisé à une paroi latérale délimitant l'enceinte principale (52), et un bord libre inférieur (70B, 72B, 74B).

3. Dispositif de surverse (50) selon la revendication 1 ou 2, dans lequel l'enceinte principale (52) comporte des premier et second organes de protection (70, 72) agencés entre la première ouverture latérale (66) et le premier embout inférieur de sortie d'eau (56) dans la direction verticale (Z), et agencés l'un en dessous de l'autre dans cette direction verticale (Z).

4. Dispositif de surverse selon la revendication 3, dans lequel le premier organe de protection (70) comporte une première paroi de protection présentant un premier bord libre (70B) délimitant une première fente (80) avec une paroi latérale (67) de l'enceinte principale située en regard dans une direction transversale (Y), et le second organe de protection (72) comporte une seconde paroi de protection présentant un second bord libre (72B) délimitant une seconde fente (82) avec une paroi latérale (76) de l'enceinte principale (52) située en regard dans la direction transversale (Y), la première fente (80) étant située en regard d'une partie pleine de la seconde paroi (72) dans la direction verticale (Z), et la seconde fente (82) étant située en regard d'une partie pleine de la première paroi (70) dans la direction verticale (Z).

5. Dispositif de surverse (50) selon l'une quelconque des revendications précédentes, dans lequel l'enceinte principale (52) comporte un troisième organe de protection (74) agencé entre la première ouverture latérale (66) et l'embout supérieur d'arrivée d'eau (54) dans la direction verticale (Z).

6. Dispositif de surverse (50) selon l'une quelconque des revendications précédentes, dans lequel l'enceinte secondaire (62) comporte une seconde ouverture latérale (68), débouchant vers l'extérieur du dispositif de surverse (50).

7. Dispositif de surverse (50) selon la revendication 6, dans lequel la seconde ouverture latérale (68) est agencée au-dessus de la première ouverture latérale (66) dans la direction verticale (Z).

8. Installation sanitaire (10) de véhicule de transport, comportant un premier réservoir (20) et un second réservoir (26), **caractérisé en ce qu'**il comporte au moins un dispositif de surverse (50) selon l'une quelconque des revendications précédentes, agencé entre le premier réservoir (20) et le second réservoir (26).

9. Installation sanitaire (10) selon la revendication 8, dans laquelle le premier réservoir (20) est un réservoir d'eau claire, et le second réservoir (26) est un réservoir d'eau grise.

10. Installation sanitaire (10) selon la revendication 8 ou 9, comportant une cuvette de WC (16), l'embout de sortie (56) du dispositif de surverse étant relié d'une part au second réservoir (26), et d'autre part à la cuvette de WC (16), via une vanne à trois voies (60).

## Patentansprüche

1. Überlaufvorrichtung (50) zum Einbau in eine Sanitäranlage (10) eines Transportfahrzeuges zwischen einem ersten Behälter (20) und einem zweiten Behälter (26), die eine Hauptumfassung (52) aufweist, die sich in einer senkrechten Richtung (Z) zwischen einem oberen Wasserzufuhrstutzen, der vorgesehen ist, an den ersten Behälter (20) angeschlossen zu werden, und einem ersten unteren Wasserablaufstutzen (56), der vorgesehen ist, an dem zweiten Behälter (26) angeschlossen zu werden, erstreckt,
**dadurch gekennzeichnet, dass**:
- die Überlaufvorrichtung (50) eine Sekundärumfassung (62) aufweist, die einen zweiten unteren Wasserablaufstutzen (64) umfasst, wobei die Sekundärumfassung (62) neben der Hauptumfassung (52) liegt und die Hauptumfassung (52) eine erste seitliche Überlauföffnung (66) umfasst, die in die Sekundärumfassung (62) mündet, wobei die erste seitliche Öffnung (66) zwischen dem oberen Wasserzufuhrstutzen (54) und dem unteren Wasserablaufstutzen (56) in der senkrechten Richtung (Z) angeordnet ist, und
- die Hauptumfassung (52) mindestens ein Schutzelement (70, 72, 74) aufweist, das sich quer in dieser Hauptumfassung (52) erstreckt, wobei es mehr als 70% der Fläche eines Querschnitts dieser Hauptumfassung (52) abdeckt.

2. Überlaufvorrichtung (50) nach Anspruch 1, bei der jedes Schutzelement (70, 72, 74) mindestens eine nach unten geneigte Schutzwand (70, 72, 74) aufweist und sich quer zwischen einem oberen Rand (70A, 72A, 74A), der mit einer die Hauptumfassung (52) begrenzenden Seitenwand verbunden ist, und einem freien unteren Rand (70B, 72B, 74B) erstreckt.

3. Überlaufvorrichtung (50) nach Anspruch 1 oder 2, bei der die Hauptumfassung (52) ein erstes und ein zweites Schutzelement (70, 72) aufweist, die zwischen der ersten seitlichen Öffnung (66) und dem ersten unteren Wasserablaufstutzen (56) in der senkrechten Richtung (Z) angeordnet sind und die eines unter dem anderen in dieser senkrechten Richtung (Z) eingebaut sind.

4. Überlaufvorrichtung nach Anspruch 3, bei dem das erste Schutzelement (70) eine erste Schutzwand besitzt, die einen ersten freien Rand (70B) aufweist, der einen ersten Spalt (80) mit einer in einer Querrichtung (Y) gegenüberliegenden Seitenwand (67) der Hauptumfassung begrenzt, und das zweite Schutzelement (72) eine zweite Schutzwand besitzt, die einen zweiten freien Rand (72B) aufweist, der einen zweiten Spalt (82) mit einer in einer Querrichtung (Y) gegenüberliegenden Seitenwand (76) der Hauptumfassung (52) begrenzt, wobei der erste Spalt (80) gegenüber einem geschlossenen Teil der zweiten Wand (72) in der senkrechten Richtung (Z) liegt und der zweite Spalt (82) gegenüber einem geschlossenen Teil der ersten Wand (70) in der senkrechten Richtung (Z) liegt.

5. Überlaufvorrichtung nach einem beliebigen der vorhergehenden Ansprüche, bei der die Hauptumfassung (52) ein drittes Schutzelement (74) aufweist, das zwischen der ersten seitlichen Öffnung (66) und dem oberen Wasserzufuhrstutzen (54) in der senkrechten Richtung (Z) angeordnet ist.

6. Überlaufvorrichtung (50) nach einem beliebigen der vorhergehenden Ansprüche, bei der die Sekundärumfassung (62) eine zweite seitliche Öffnung (68) aufweist, die in Bezug auf die Überlaufvorrichtung (50) nach außen mündet.

7. Überlaufvorrichtung (50) nach Anspruch 6, bei der die zweite seitliche Öffnung (68) über der ersten seitlichen Öffnung (66) in der senkrechten Richtung (Z) angeordnet ist.

8. Sanitäranlage (10) eines Transportfahrzeugs, die einen ersten Behälter (20) und einen zweiten Behälter (26) aufweist, **dadurch gekennzeichnet, dass** sie mindestens eine Überlaufvorrichtung (50) nach einem beliebigen der vorhergehenden Ansprüche aufweist, die zwischen dem ersten Behälter (20) und dem zweiten Behälter (26) angeordnet ist.

9. Sanitäranlage (10) nach Anspruch 8, bei der der erste Behälter (20) ein Frischwasserbehälter ist und der zweite Behälter (26) ein Grauwasserbehälter ist.

10. Sanitäranlage (10) nach Anspruch 8 oder 9, die ein WC Becken (16) aufweist, wobei der Ausgangsstutzen (56) der Überlaufvorrichtung einerseits an den zweiten Behälter (26) und andererseits an das WC Becken (16) über ein Dreiwegeventil (60) angeschlossen ist.

## Claims

1. Overflow device (50) which is to be arranged in a sanitary installation (10) of a transport vehicle between a first tank (20) and a second tank (26), comprising a main enclosure (52) extending in a vertical direction (Z) between an upper water inlet nozzle (54), which is to be connected to the first tank (20), and a first lower water outlet nozzle (56), which is to be connected to the second tank (26), **characterised in that**:
- the overflow device (50) comprises a secondary enclosure (62) comprising a second lower water outlet nozzle (64), the secondary enclosure (62) being adjacent to the main enclosure (52), and the main enclosure (52) comprising a first lateral overflow opening (66) which opens into the secondary enclosure (62), the first lateral opening (66) being arranged between the upper water inlet nozzle (54) and the lower water outlet nozzle (56) in the vertical direction (Z), and
- the main enclosure (52) comprises at least one protection member (70, 72, 74) extending transversely in the main enclosure (52) and covering more than 70% of the surface of a cross-section of the main enclosure (52).

2. Overflow device (50) according to claim 1, wherein each protection member (70, 72, 74) comprises at least one downwardly sloping protection wall (70, 72, 74) and extends transversely between an upper edge (70A, 72A, 74A), which is attached to a lateral wall delimiting the main enclosure (52), and a lower free edge (70B, 72B, 74B).

3. Overflow device (50) according to claim 1 or 2, wherein the main enclosure (52) comprises first and second protection members (70, 72) which are arranged between the first lateral opening (66) and the first lower water outlet nozzle (56) in the vertical direction (Z) and are arranged one beneath the other in the vertical direction (Z).

4. Overflow device according to claim 3, wherein the first protection member (70) has a first protection wall having a first free edge (70B) which delimits a first slot (80) with a lateral wall (67) of the main enclosure situated opposite in a transverse direction (Y), and the second protection member (72) has a second protection wall having a second free edge (72B) which delimits a second slot (82) with a lateral wall (76) of the main enclosure (52) situated opposite in the transverse direction (Y), the first slot (80) being situated opposite an unbroken portion of the second wall (72) in the vertical direction (Z), and the second slot (82) being situated opposite an unbroken portion of the first wall (70) in the vertical direction (Z).

5. Overflow device (50) according to any one of the preceding claims, wherein the main enclosure (52) has a third protection member (74) arranged between the first lateral opening (66) and the upper water inlet nozzle (54) in the vertical direction (Z).

6. Overflow device (50) according to any one of the preceding claims, wherein the secondary enclosure (62) has a second lateral opening (68) which opens towards the outside of the overflow device (50).

7. Overflow device (50) according to claim 6, wherein the second lateral opening (68) is arranged above the first lateral opening (66) in the vertical direction (Z).

8. Sanitary installation (10) for a transport vehicle, comprising a first tank (20) and a second tank (26), **characterised in that** it comprises at least one overflow device (50) according to any one of the preceding claims arranged between the first tank (20) and the second tank (26).

9. Sanitary installation (10) according to claim 8, wherein the first tank (20) is a clean water tank and the second tank (26) is a grey water tank.

10. Sanitary installation (10) according to claim 8 or 9, comprising a lavatory bowl (16), the outlet nozzle (56) of the overflow device being connected on the one hand to the second tank (26) and on the other hand to the lavatory bowl (16) *via* a three-way valve (60).
